# EUROPEAN PATENT APPLICATION

(11) **EP 4 653 987 A1**
(43) Date of publication of application: **26.11.2025**
(21) Application number: 24826238.8
(22) Date of filing: 19.06.2024
(51) Int. Cl.: G06F 3/03, G03B 11/00, H04N 23/11, H04N 25/13, H04N 23/73, H04N 23/76

(54) **ELECTRONIC DEVICE AND CONTROL METHOD THEREOF**

(30) Priority: 23.06.2023 KR 20230081456
(71) Applicant: Samsung Electronics Co., Ltd., Suwon-si, Gyeonggi-do 16677 (KR)
(72) Inventor: KANG, Heungsuk, Suwon-si Gyeonggi-do 16677 (KR); KIM, Jaeyong, Suwon-si Gyeonggi-do 16677 (KR); LEE, Seungik, Suwon-si Gyeonggi-do 16677 (KR)
(74) Representative: Appleyard Lees IP LLP
(86) International application number: PCT/KR2024/008437
(87) International publication number: WO 2024/262922

(57) **Abstract**

An electronic apparatus and a control method thereof are disclosed. The electronic apparatus according to the disclosure includes: a projection unit; a camera; a memory storing at least one instruction; and one or more processors connected to the projection unit, the camera, and the memory to control the electronic apparatus, wherein the one or more processors are configured to, by executing the at least one instruction,: control the projection unit to output an original image onto a projection surface; acquire a first image by adjusting at least one of a gain value and an exposure value of the camera to a first predetermined value while the original image is output onto the projection surface and taking a picture output onto the projection surface; acquire a second image by adjusting at least one of the gain value and the exposure value of the camera to a second predetermined value and taking the picture output onto the projection surface; and identify a user's touch location on the picture output onto the projection surface based on the first image and the second image, and the camera senses a relatively larger amount of light when at least one of the gain value and the exposure value of the camera is set to the first predetermined value than when at least one of the gain value and the exposure value of the camera is set to the second predetermined value.

## Description

### [Technical Field

The disclosure relates to an electronic apparatus and a control method thereof, and more specifically, to an electronic apparatus to which a filter that transmits infrared light and visible light therethrough is applied to identify a user' s touch on a projection screen, and a control method thereof.

### [Background Art]

An electronic apparatus including a projection unit may output image or picture content by emitting light corresponding to an image. The light emitted by the electronic apparatus may be output as image or picture content on a projection surface such as a wall, a floor, or a ceiling.

As the technology for identifying a user's touch through a display implemented as a touch screen while image or picture content is output on the display has become common, an electronic apparatus including a projection unit is capable of identifying a user's touch on a projection image output based on light emitted to a projection surface and performing a function corresponding to the user's touch input.

By sensing a light reflecting and scattering phenomenon caused by the user's touch on the projection image, the user's touch and the touch location corresponding to an object output to the projection image can be identified.

### [DISCLOSURE]

### [Technical Solution]

According to an embodiment of the disclosure, an electronic apparatus includes: a projection unit; a camera; a memory storing at least one instruction; and one or more processors connected to the projection unit, the camera, and the memory to control the electronic apparatus, wherein the one or more processors are configured to, by executing the at least one instruction,: control the projection unit to output an original image onto a projection surface; acquire a first image by adjusting at least one of a gain value and an exposure value of the camera to a first predetermined value while the original image is output onto the projection surface and taking a picture output onto the projection surface; acquire a second image by adjusting at least one of the gain value and the exposure value of the camera to a second predetermined value and taking the picture output onto the projection surface; and identify a user's touch location on the picture output onto the projection surface based on the first image and the second image, and the camera senses a relatively larger amount of light when at least one of the gain value and the exposure value of the camera is set to the first predetermined value than when at least one of the gain value and the exposure value of the camera is set to the second predetermined value.

The camera may include a filter configured to transmit visible light and infrared light therethrough, and the filter may be implemented in such a manner that an amount of the transmitted infrared light is larger than an amount of the transmitted visible light by a predetermined amount or more.

The one or more processors may be configured to: acquire the first image by sensing light including the visible light and the infrared light transmitted through the filter through the camera in a state where the exposure value of the camera is adjusted to a first exposure value; and acquire the second image by sensing light including the visible light and the infrared light transmitted through the filter through the camera in a state where the exposure value of the camera is adjusted to a second exposure value, and an amount of the visible light sensed through the camera to acquire the second image may be smaller than a threshold value.

The one or more processors may be configured to: acquire the first image by sensing light including the visible light and the infrared light transmitted through the filter through the camera in a state where the gain value of the camera is adjusted to a first gain value; and acquire the second image by sensing light including the visible light and the infrared light transmitted through the filter through the camera in a state where the gain value of the camera is adjusted to a second gain value, and an amount of the visible light sensed through the camera to acquire the second image may be smaller than a threshold value.

The one or more processors may be configured to: identify at least one coordinate corresponding to the user's touch location among a plurality of predetermined coordinates included in the picture output onto the projection surface based on the second image; identify a location corresponding to the identified at least one coordinate in the first image; and identify the user's touch location on the picture output onto the projection surface based on the identified location.

The one or more processors may be configured to adjust at least one of the gain value and the exposure value of the camera in such a manner that a predetermined number of points of reflected light of the infrared light are identified on the acquired second image.

The one or more processors may be configured to: identify a correction value for correcting the picture output onto the projection surface based on the first image and the original image; acquire a corrected first image and a corrected second image based on the correction value; and identify a touch coordinate on the picture output onto the projection surface based on the corrected first image and the corrected second image.

The one or more processors may be configured to: acquire spatial information corresponding to the projection surface based on the first image; and correct the user's touch location on the picture output onto the projection surface based on the touch location identified in the second image and the spatial information corresponding to the projection surface.

According to another embodiment of the disclosure, a method for controlling an electronic apparatus includes: controlling a projection unit to output an original image onto a projection surface; acquiring a first image by adjusting at least one of a gain value and an exposure value of a camera to a first predetermined value while the original image is output onto the projection surface and taking a picture output onto the projection surface; acquiring a second image by adjusting at least one of the gain value and the exposure value of the camera to a second predetermined value and taking the picture output onto the projection surface; and identifying a user's touch location on the picture output onto the projection surface based on the first image and the second image, wherein the camera senses a relatively larger amount of light when at least one of the gain value and the exposure value of the camera is set to the first predetermined value than when at least one of the gain value and the exposure value of the camera is set to the second predetermined value.

The camera may include a filter configured to transmit visible light and infrared light therethrough, and the filter may be implemented in such a manner that an amount of the transmitted infrared light is larger than an amount of the transmitted visible light by a predetermined amount or more.

In the acquiring of the first image, the first image may be acquired by sensing light including the visible light and the infrared light transmitted through the filter through the camera in a state where the exposure value of the camera is adjusted to a first exposure value, in the acquiring of the second image, the second image may be acquired by sensing light including the visible light and the infrared light transmitted through the filter through the camera in a state where the exposure value of the camera is adjusted to a second exposure value, and an amount of the visible light sensed through the camera to acquire the second image may be smaller than a threshold value.

In the acquiring of the first image, the first image may be acquired by sensing light including the visible light and the infrared light transmitted through the filter through the camera in a state where the gain value of the camera is adjusted to a first gain value, in the acquiring of the second image, the second image may be acquired by sensing light including the visible light and the infrared light transmitted through the filter through the camera in a state where the gain value of the camera is adjusted to a second gain value, and an amount of the visible light sensed through the camera to acquire the second image may be smaller than a threshold value.

The method may further include: identifying at least one coordinate corresponding to the user's touch location among a plurality of predetermined coordinates included in the picture output onto the projection surface based on the second image; identifying a location corresponding to the identified at least one coordinate in the first image; and identifying the user's touch location on the picture output onto the projection surface based on the identified location.

The method may further include adjusting at least one of the gain value and the exposure value of the camera in such a manner that a predetermined number of points of reflected light of the infrared light are identified on the acquired second image.

The method may further include: identifying a correction value for correcting the picture output onto the projection surface based on the first image and the original image; acquiring a corrected first image and a corrected second image based on the correction value; and identifying a touch coordinate on the picture output onto the projection surface based on the corrected first image and the corrected second image.

The method may further include: acquiring spatial information corresponding to the projection surface based on the first image; and correcting the user's touch location on the picture output onto the projection surface based on the touch location identified in the second image and the spatial information corresponding to the projection surface.

A non-transitory computer-readable recording medium storing computer instructions to be executed by a processor of an electronic apparatus to cause the electronic apparatus to perform an operation including: controlling a projection unit to output an original image onto a projection surface; acquiring a first image by adjusting at least one of a gain value and an exposure value of a camera to a first predetermined value while the original image is output onto the projection surface and taking a picture output onto the projection surface; acquiring a second image by adjusting at least one of the gain value and the exposure value of the camera to a second predetermined value and taking the picture output onto the projection surface; and identifying a user's touch location on the picture output onto the projection surface based on the first image and the second image, wherein the camera senses a relatively larger amount of light when at least one of the gain value and the exposure value of the camera is set to the first predetermined value than when at least one of the gain value and the exposure value of the camera is set to the second predetermined value.

### [Brief Description of Drawings]

The above and other aspects, features, and advantages of specific embodiments of the disclosure will be more apparent from the following description taken into conjunction with the accompanying drawings, in which:
FIG. 1 is a block diagram for explaining a configuration of an electronic apparatus according to an embodiment of the disclosure;
FIG. 2 is a diagram for explaining a method of identifying a user's touch on a projection image according to the prior art;
FIG. 3A is a diagram for explaining RGB color filters and photodiodes according to the prior art;
FIG 3B is a graph showing quantum efficiencies of RGB color filters and photodiodes for each wavelength band of light according to the prior art;
FIG. 4A is a diagram for explaining a filter that transmits visible light and infrared light therethrough according to an embodiment of the disclosure;
FIG. 4B is a graph showing an intensity for each wavelength band of light transmitted through a filter that transmits visible light and infrared light according to an embodiment of the disclosure;
FIG. 5A is a diagram for explaining an acquired image distorted depending on a curvature of a lens of a camera and an image-capturing angle according to an embodiment of the disclosure;
FIG. 5B is a diagram for explaining an operation of correcting an acquired image distorted depending on a curvature of a lens of a camera and an image-capturing angle according to an embodiment of the disclosure;
FIG. 6 is a flowchart for explaining a process of adjusting a gain value and an exposure value of a camera according to an embodiment of the disclosure;
FIG. 7 is a diagram illustrating an operation of correcting a difference between an actual touch position and an identified position on an image acquired from reflected light according to a user's touch according to an embodiment of the disclosure;
FIG. 8 is a block diagram for explaining a configuration of an electronic apparatus according to an embodiment of the disclosure; and
FIG. 9 is a flowchart for explaining an operation of an electronic apparatus according to an embodiment of the disclosure.

### [Best Mode for Carrying Out the Invention]

While the embodiments may be diversely modified, and there may be various embodiments, specific embodiments are illustrated in the drawings and described in detail in the detailed description. However, it should be understood that there is no intent to limit the scope of the disclosure to the particular forms disclosed herein, and rather, the disclosure should be construed to cover various modifications, equivalents, and/or alternatives of embodiments of the disclosure. In describing the drawings, similar reference signs may be used to denote similar components.

In describing the disclosure, when it is determined that a detailed description of a relevant known function or configuration may unnecessarily obscure the gist of the disclosure, the detailed description thereof will be omitted.

The terms used herein are only to describe particular embodiments, and are not intended to limit the scope of the disclosure. Singular expressions include plural expressions unless the context clearly indicates otherwise.

The expression "have", "may have", "include", "may include", or the like used herein indicates the presence of stated features (e.g., numerical values, functions, operations, or components such as parts) and does not preclude the presence of additional features.

The expression "A or B", "at least one of A and/or B", "one or more of A and/or B", or the like used herein may include all possible combinations of items enumerated therewith. For example, "A or B", "at least one of A and B", or "at least one of A or B" may mean (1) including at least one A, (2) including at least one B, or (3) including both at least one A and at least one B.

The expressions "first", "second", and the like used herein may modify various components regardless of order and/or importance, and may be used to distinguish one component from another component, and do not limit the components.

It should further be understood that when a component (e.g., a first component) is referred to as being "(operatively or communicatively) coupled with/to" or "connected to" another component (e.g., a second component), this means that the components are coupled with/to each other directly or via an intervening component (e.g., a third component).

On the other hand, it should be understood that when a component (e.g., a first component) is referred to as being "directly coupled with/to" or "directly connected to" another component (e.g., a second component), this means that there is no intervening component (e.g., a third component) between the components.

The expression "configured to (or set to)" used herein may be used interchangeably with the expression "suitable for", "having the capacity to", "designed to", "adapted to", "made to", or "capable of" according to a situation. The term "configured to (set to)" does not necessarily mean "specifically designed to" in hardware.

Instead, the expression "a device configured to ..." may mean that the device is "capable of ... " along with other devices or parts in a certain situation. For example, the phrase "a processor configured to (set to) perform A, B, and C" may mean a dedicated processor (e.g., an embedded processor) for performing the corresponding operations, or a generic-purpose processor (e.g., a CPU or an application processor) capable of performing the corresponding operations by executing one or more software programs stored in a memory device.

In an embodiment, a "module" or a "unit" performs at least one function or operation, and may be implemented as hardware, software, or a combination thereof. In addition, a plurality of "modules" or a plurality of "units" may be integrated into at least one module and may be implemented as at least one processor except for "modules" or "units" that need to be implemented in specific hardware.

Meanwhile, various elements and regions in the drawings are schematically illustrated. Thus, the technical spirit of the disclosure is not limited by relative sizes or distances shown in the accompanying drawings.

Hereinafter, embodiments according to the disclosure will be described in detail with reference to the accompanying drawings so that the embodiments can be easily carried out by those having ordinary knowledge in the art to which the disclosure pertains.

An electronic apparatus according to the disclosure is capable of identifying a user's touch on a projection screen by applying a filter that transmits infrared light and visible light therethrough. The electronic apparatus may be a projection image projecting device, but is not limited thereto.

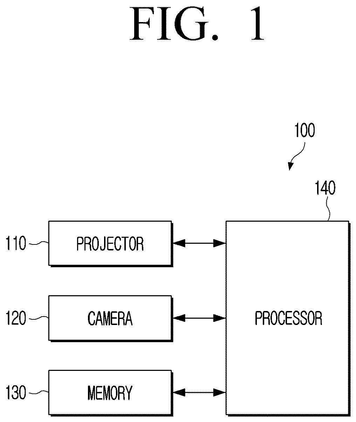

FIG. 1 is a block diagram for explaining a configuration of an electronic apparatus according to an embodiment of the disclosure.

Referring to FIG. 1, the electronic apparatus 100 may include a projection unit 110, a camera 120, a memory 130, and one or more processors 140 (hereinafter referred to as a processor 140).

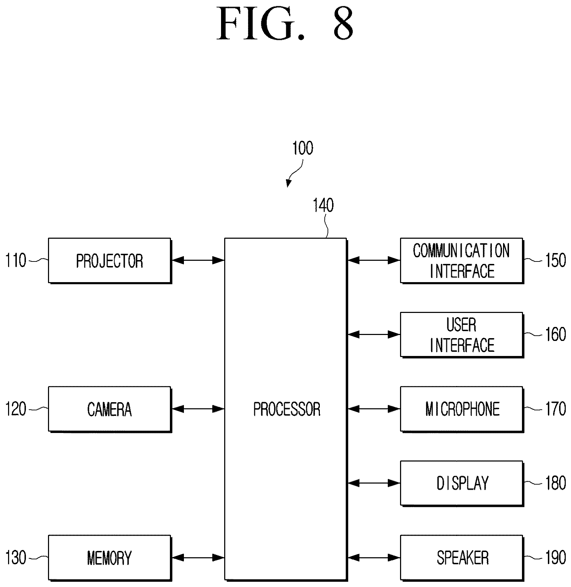

However, the components of the electronic apparatus 100 are not limited thereto, and may additionally include various apparatus components as will be described below with reference to FIG. 8, or some components may be omitted.

The projection unit 110 may output an image to be output from the electronic apparatus 100 on a projection surface. The projection unit 110 may include a projection lens. The projection surface may be a partial portion of a physical space to which the image is output, or may be a separate screen.

The projection unit 110 is configured to project a picture to the outside. According to an embodiment of the disclosure, the projection unit 110 may be implemented in the various projection methods (e.g., a cathode-ray tube (CRT) method, a liquid crystal display (LCD) method, a digital light processing (DLP) method, a laser method, etc.). As an example, the CRT method basically has the same principle as the CRT monitor. In the CRT method, an image is displayed on a screen after being magnified with a lens in front of a cathode ray tube (CRT). The CRT method is divided into a one-tube type CRT method and a three-tube type CRT method depending on the number of cathode ray tubes. In the three-tube type CRT method, red, green, and blue cathode ray tubes may be implemented separately from each other.

As another example, in the LCD method, an image is displayed by transmitting light emitted from a light source through liquid crystal. The LCD method is divided into a single-panel type LCD method and a three-panel type LCD method. In the three-panel type LCD method, the light emitted from the light source may be separated into red light, green light, and blue light by a dichroic mirror (a mirror that reflects only light having specific colors and allows light having the other colors to pass therethrough), and then the red light, the green light, and the blue light may converge after passing through the liquid crystal.

As another example, in the DLP method, an image is displayed using a digital micromirror device (DMD) chip. The projection unit 110 in the DLP method may include a light source, a color wheel, a DMD chip, a projection lens, etc. Light output from the light source may be colored while passing through the color wheel that is rotating. The light having passed through the color wheel is input to the DMD chip. The DMD chip includes numerous micro-mirrors and reflects the light input to the DMD chip. The projection lens may serve to enlarge the light reflected from the DMD chip to a picture size.

As another example, in the laser method, diode pumped solid state (DPSS) lasers and galvanometers are used. As lasers outputting various colors, three DPSS lasers are installed for RGB colors with their optical axes being overlapped with each other using special mirrors. The galvanometer includes a mirror and a high-power motor that moves the mirror at a high speed. For example, the galvanometer may rotate the mirror at up to 40 KHz/sec. The galvanometers are mounted according to a scanning direction. In general, since the projector performs flat scanning, the galvanometers may be arranged separately on x and y axes.

Meanwhile, the projection unit 110 may include various types of light sources. For example, the projection unit 110 may include at least one light source among a lamp, an LED, and a laser.

The projection unit 110 may output an image in a 4:3 screen ratio, a 5:4 screen ratio, or a 16:9 wide screen ratio depending on the purpose of use of the electronic apparatus 100, the user's settings, or the like, and may output an image at various resolutions such as WVGA (854*480), SVGA (800*600), XGA (1024*768), WXGA (1280*720), WXGA (1280*800), SXGA (1280*1024), UXGA (1600*1200), and Full HD (1920*1080) depending on the screen ratio.

Meanwhile, the projection unit 110 may function to output an image on the projection surface. The projection unit 110 may perform various functions to adjust the output image under the control of the processor 140. Here, although the projection unit 110 is described, the electronic apparatus 100 may project an image in various ways.

The camera 120 may be a device that takes a still picture and a moving picture. According to an embodiment, the camera 120 may include a lens (e.g., a convex lens, a concave lens, a spherical lens, a flat lens, a wide-angle lens, or the like) that refracts one or more lights to collect or spread the lights, an image sensor that converts light into electric charges to acquire an image (e.g. a charge-coupled device (CCD) or a complementary metal-oxide semiconductor (CMOS)), an image signal processor 140, or a flash. In addition, the camera 120 may include an aperture, a viewfinder, a zebra device that detects whether a picture is overexposed through the CCD inside the camera 120, etc.

The processor 140 may acquire an RGB image by sensing light in the visible light region through the camera 120. The camera 120 may acquire an infrared image by sensing light in the infrared light region. However, the processor 140 is not limited thereto, and the processor 140 may acquire an image by sensing light in various wavelength bands through the camera 120.

The camera 120 may include a filter that transmits visible light and infrared light therethrough. Light entering through the lens may be transmitted through the filter that transmits only light having a wavelength in the visible and infrared light regions. The filter may be implemented in such a manner that an amount of infrared light to be transmitted is larger than an amount of visible light to be transmitted by a predetermined amount or more.

While an original image is output onto the projection surface, the processor 140 may acquire a first image by adjusting at least one of a gain value and an exposure value of the camera 120 to a first predetermined value and taking a picture output onto the projection surface through the camera 120.

Here, the gain value of the camera 120 indicates a degree of amplification of a signal corresponding to light sensed through the camera 120. The processor 140 may acquire an image as if brighter light, that is, a large amount of light, is sensed as the gain value of the camera 120 increases, and acquire an image as if darker light, that is, a small amount of light, is sensed as the gain value of the camera 120 decreases.

The exposure value of the camera 120 is a measure indicating how much light is sensed to acquire an image when the image is acquired through the camera 120. The exposure value of the camera 120 is determined by three factors: aperture value, shutter speed, and sensitivity.

The processor 140 acquires an image by sensing brighter light, that is, a larger amount of light, as the exposure value of the camera 120 increases, and acquires an image by sensing darker light, that is, a smaller amount of light, as the exposure value of the camera 120 decreases.

The processor 140 may acquire a second image by adjusting at least one of the gain value and the exposure value of the camera 120 to a second predetermined value and taking the picture output onto the projection surface through the camera 120.

A relatively larger amount of light may be sensed when at least one of the gain value and exposure value of the camera 120 is set to the first predetermined value than when at least one of the gain value and exposure value of the camera 120 is set to the second predetermined value.

The memory 130 temporarily or non-temporarily stores various types of programs or data, and transmits the stored information to the processor 140 according to a call from the processor 140. In addition, the memory 130 may store various types of information necessary for the processor 140 to perform calculation, processing, or control operations in electronic format.

The memory 130 may include, for example, at least one of a main memory and an auxiliary memory. The main memory may be implemented using a semiconductor storage medium such as a ROM and/or a RAM. The ROM may include, for example, a typical ROM, an EPROM, an EEPROM, and/or a MASK-ROM. The RAM may include, for example, a DRAM and/or an SRAM. The auxiliary memory may be implemented using at least one storage medium capable of permanently or semi-permanently storing data, such as an optical medium such as a flash memory 130 device, a secure digital (SD) card, a solid state drive (SSD), a hard disc drive (HDD), a magnetic drum, a compact disk (CD), a DVD, or a laser disk, a magnetic tape, a magneto-optical disk, and/or a floppy disk.

The memory 130 may store an RGB image acquired by sensing light in the visible light region through the camera 120 and an infrared image acquired by sensing light in the infrared light region acquired through the camera 120. The memory 130 may store a gain value and an exposure value of the camera 120.

The memory 130 may store a correction value for correcting the picture output onto the projection surface, an image corrected based on the correction value, a touch coordinate on the picture output onto the projection surface, and a user's touch location on the picture output onto the projection surface.

The memory 130 may store spatial information corresponding to the projection surface based on the image and a value for correcting the user's touch location on the picture output onto the projection surface based on the spatial information.

However, the memory 130 is not limited to this, and the memory 130 may store information about an operation of acquiring an image by sensing light and various types of information for adjusting the gain value or the exposure value of the camera 120.

The processor 140 controls an overall operation of the electronic apparatus 100. Specifically, the processor 140 may be connected to the components of the electronic apparatus 100 including the memory 130 as described above to generally control the operation of the electronic apparatus 100 by executing at least one instruction stored in the memory 130 as described above. In particular, the processor 140 may be implemented as one processor 140, or may also be implemented as a plurality of processors 140.

The processor 140 may be implemented in various ways. For example, the one or more processors 140 may include at least one of a central processing unit (CPU), a graphics processing unit (GPU), an accelerated processing unit (APU), a many integrated core (MIC), a digital signal processor (DSP), a neural processing unit (NPU), a hardware accelerator, or a machine learning accelerator. The one or more processors 140 may control one or any combination of the other components of the electronic apparatus 100, and may perform operations related to communication or data processing. The one or more processors 140 may execute one or more programs or instructions stored in the memory 130. For example, the one or more processors 140 may perform a method according to an embodiment of the disclosure by executing one or more instructions stored in the memory 130.

In a case where a method according to an embodiment of the disclosure includes a plurality of operations, the plurality of operations may be performed by one processor 140 or by a plurality of processors 140. For example, in a case where a first operation, a second operation, and a third operation are performed by a method according to an embodiment, all of the first operation, the second operation, and the third operation may be performed by a first processor, or the first operation and the second operation may be performed by the first processor (e.g., a general-purpose processor) and the third operation may be performed by a second processor (e.g., an artificial intelligence-specific processor).

The one or more processors 140 may be implemented as a single core processor including one core, or may be implemented as one or more multicore processors including a plurality of cores (e.g., homogeneous multiple cores or heterogeneous multiple cores). In a case where the one or more processors 140 are implemented as a multi-core processor, each of the plurality of cores included in the multi-core processor may include the memory 130 inside the processor 140, such as an on-chip memory 130, a common cache shared by the plurality of cores may be included in the multi-core processor. In addition, each of the plurality of cores (or some of the plurality of cores) included in the multi-core processor may independently read and execute program instructions for implementing a method according to an embodiment of the disclosure, or all (or some) of the plurality of cores may read and execute program instructions for implementing a method according to an embodiment of the disclosure in cooperation with each other.

In a case where a method according to an embodiment of the disclosure includes a plurality of operations, the plurality of operations may be performed by one of the plurality of cores included in the multi-core processor, or may be performed by the plurality of cores. For example, in a case where a first operation, a second operation, and a third operation are performed by a method according to an embodiment, all of the first operation, the second operation, and the third operation may be performed by a first core included in the multi-core processor 140, or the first operation and the second operation may be performed by the first core included in the multi-core processor, and the third operation may be performed by a second core included in the multi-core processor.

In embodiments of the disclosure, the processor 140 refers to a system on chip (SoC) in which one or more processors and other electronic components are integrated, a single-core processor, a multi-core processor, or a core included in the single-core processor or the multi-core processor. Here, the core may be implemented as a CPU, a GPU, an APU, an MIC, a DSP, an NPU, a hardware accelerator, a machine learning accelerator, or the like, but the embodiments of the disclosure are not limited thereto.

The processor 140 may control the projection unit 110 to output an original image onto the projection surface by executing at least one instruction.

While the original image is output onto the projection surface, the processor 140 may acquire a first image by adjusting at least one of a gain value and an exposure value of the camera 120 to a first predetermined value and taking a picture output onto the projection surface.

The processor 140 may acquire a second image by adjusting at least one of the gain value and the exposure value of the camera 120 to a second predetermined value and taking the picture output onto the projection surface.

The processor 140 may identify a user's touch location on a picture output onto the projection surface based on the first image and the second image.

Here, the camera 120 may sense a relatively larger amount of light when at least one of the gain value and the exposure value of the camera 120 is set to the first predetermined value than when at least one of the gain value and the exposure value of the camera 120 is set to the second predetermined value.

In addition, the camera 120 may include a filter that transmits visible light and infrared light therethrough. The filter may be implemented in such a manner that an amount of infrared light to be transmitted is larger than an amount of visible light to be transmitted by a predetermined amount or more, but is not limited thereto.

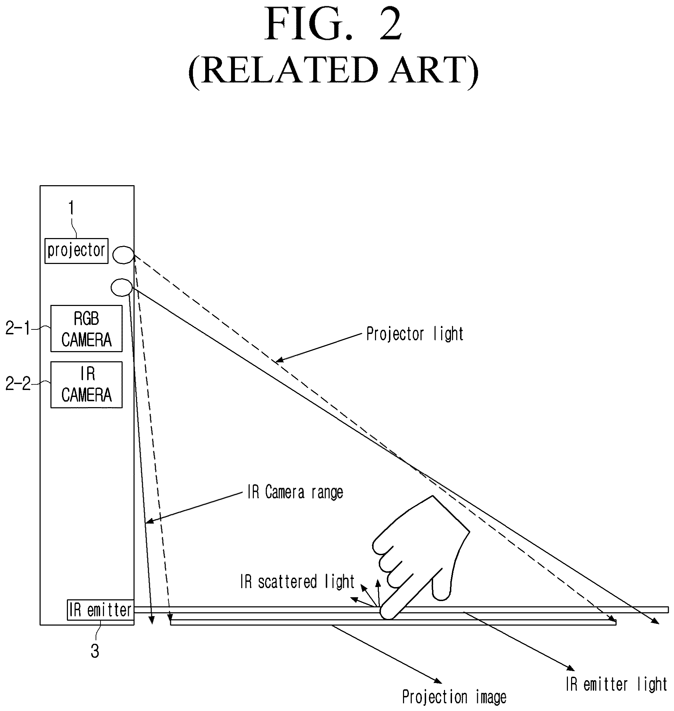

The specific operation of the processor 140 for controlling the electronic apparatus 100 will be described in detail with reference to FIGS. 2 to 7.

FIG. 2 is a diagram for explaining a method of identifying a user's touch on a projection image according to the prior art.

Referring to FIG. 2, a projector 1 may output an image or a picture, that is, a projection image, onto a projection surface by irradiating projector light.

While an image or a picture is output onto the projection surface, an infrared light emitter (IR emitter) 3 may emit infrared light in a direction parallel to the projection surface.

In this state, when a user touches an area on the projection image output onto the projection surface, the infrared light traveling parallel to the projection image is scattered or reflected by a user's finger touching the area on the projection image.

A visible light camera 2-1 acquires an RGB image for the projection image output onto the projection surface, and an infrared light camera 2-2 acquires an infrared light image by sensing infrared light reaching the infrared camera 2-2 on the projection image.

Based on the infrared light image obtained by sensing the infrared light reaching the infrared light camera 2-2, a location where the infrared light is reflected or scattered by a user's touch on the projection image can be identified. By matching the infrared light image to the RGB image for the projection image output onto the projection surface, it is possible to identify which image object on the projection image the location where the user's touch has been made corresponds to.

Here, the visible light camera 2-1 and the infrared light camera 2-2 are implemented as separate camera modules.

In a case where the visible light camera 2-1 and the infrared light camera 2-2 are implemented as separate camera modules, management and repair costs are higher than those in a case where the visible light camera 2-1 and the infrared light camera 2-2 are implemented as one camera, and a size and location of an acquired image may be different depending on the location and angle of each camera, which may require a separate correction operation task.

Therefore, there has been a demand for implementing the visible light camera 2-1 and the infrared light camera 2-2 as one camera to reduce management and repair costs, and to acquire an RGB image by sensing visible light and an infrared light image by sensing infrared light according to one fixed location and angle so that the work of matching the images can be performed more efficiently.

In this case, both an RGB image and an infrared light image may be acquired by one camera if the camera includes a filter that transmits a predetermined amount of visible light and a predetermined amount of infrared light.

Typically, a camera includes RGB color filters and photodiodes, and acquires an image by sensing light incident from the outside.

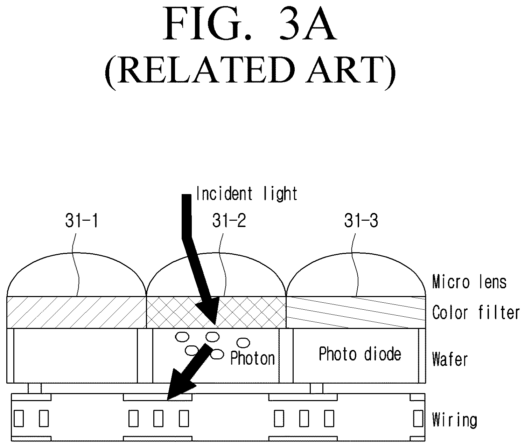

FIG. 3A is a diagram for explaining RGB color filters and photodiodes according to the prior art.

Referring to FIG. 3A, a camera may generally include a micro lens, color filters 31-1, 31-2, and 31-3 corresponding to red, green, and blue, respectively, a wafer equipped with photodiodes, and a circuit board (wiring), but is not limited thereto.

Light incident from the outside may pass through the red, green, and blue color filters 31-1, 31-2, and 31-3, visible light in wavelength bands corresponding to red, green, and blue may be incident on a p-n junction of the photodiode and thereby a current proportional to the intensity of the light may be generated, and an RGB image may be acquired based on an electrical signal caused by the generated current.

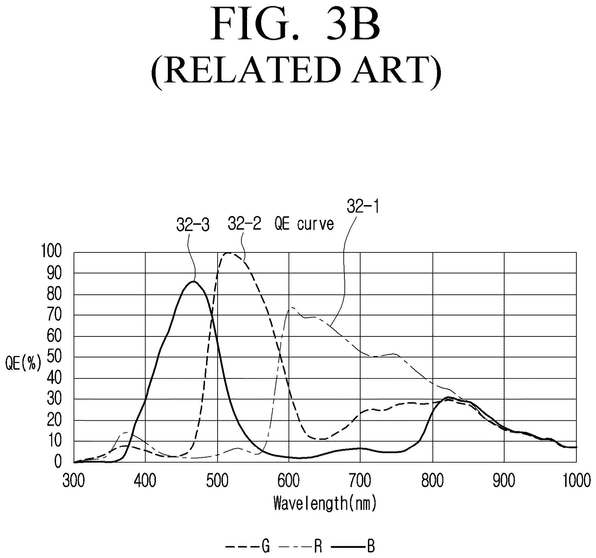

FIG 3B is a graph showing quantum efficiencies of RGB color filters and photodiodes for each wavelength band of light according to the prior art.

Referring to FIG. 3B, which shows the quantum efficiency for each wavelength band corresponding to each light having passed through each color filter, in a quantum efficiency graph 32-1 for each wavelength band of the light having passed through the red color filter 31-1, it is seen that the light having passed through the red color filter 31-1 has the highest quantum efficiency in the wavelength band of about 600 to 700 nm. In a quantum efficiency graph 32-2 for each wavelength band of the light having passed through the green color filter 31-2, it is seen that the light having passed through the green color filter 31-2 has the highest quantum efficiency in the wavelength band of about 500 to 600 nm. In a quantum efficiency graph 32-3 for each wavelength band of the light having passed through the blue color filter 31-3, it is seen that the light having passed through the blue color filter 31-3 has the highest quantum efficiency in the wavelength band of about 400 to 500 nm.

A typical camera includes an IR cut filter in addition to the above-described color filters. In the camera from which the IR cut filter is removed, it is also seen that infrared light in a wavelength band of about 850 to 950 nm has a quantum efficiency of 10 to 30%.

Therefore, an IR cut filter may be removed from a typical camera, and a filter that transmits infrared light and visible light therethrough may be applied to the typical camera. The filter may be located between the lens and the image sensor (e.g. the CCD or the CMOS) of the camera 120, but is not limited thereto.

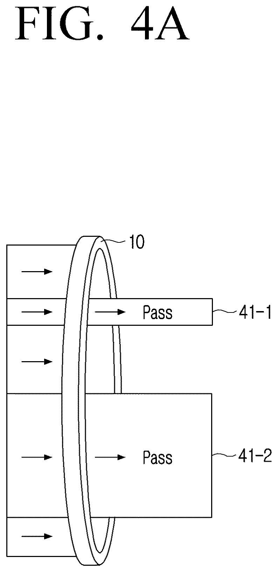

FIG. 4A is a diagram for explaining a filter that transmits visible light and infrared light therethrough according to an embodiment of the disclosure.

Referring to FIG. 4A, when light in various wavelength bands is incident on one surface of a filter 10 that transmits visible light and infrared light therethrough, only light 41-1 having a wavelength in the infrared light region and light 41-2 having a wavelength in the visible light region are transmitted to travel.

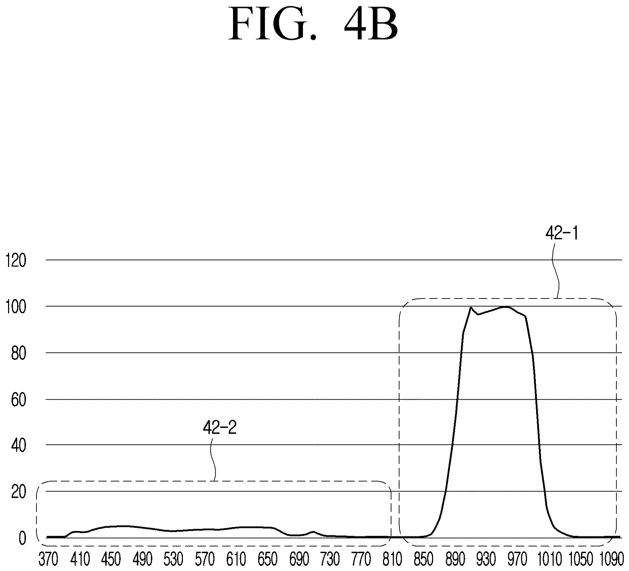

FIG. 4B is a graph showing an intensity for each wavelength band of light transmitted through a filter that transmits visible light and infrared light therethrough according to an embodiment of the disclosure.

Referring to FIG. 4B, it is seen from a graph area 42-1 for the wavelength band corresponding to the infrared light 41-1 transmitted through the filter 10 and a graph area 42-2 for the wavelength band corresponding to the visible light 41-2 that the intensity of the infrared light (41-1) having passed through the filter 10 has a relatively larger value than the intensity of the visible light 41-2 having passed through the filter 10.

That is, the filter 10 may be implemented in such a manner that the amount of the infrared light 41-1 transmitted through the filter 10 is larger than the amount of the visible light 41-2 transmitted through the filter 10 by a predetermined amount or more. The proportion of the visible light 41-2 with respect to the infrared light 41-1 and the visible light 41-2 having passed through the filter 10 may be limited to 10% or less, but is not limited thereto.

Concerning the RGB ratio of the visible light 41-2 transmitted through the filter 10, a transmittance of visible light corresponding to red and a transmittance of visible light corresponding to green and blue may be designed to be 4:6 (e.g., R: 2%, G: 3.5 %, B: 3.5%) in consideration of a reflectance of a hand approaching the projection surface for each wavelength. However, the RGB ratio of the visible light 41-2 transmitted through the filter 10 is not limited thereto.

The processor 140 may identify a user's touch location on a projection image by acquiring a first image corresponding to an RGB image acquired by sensing the visible light 41-2 and a second image corresponding to an image acquired by sensing the infrared light 41-1, while a gain value and an exposure value of the camera 120 being different when the images are acquired through the camera 120 including the above-described filter 10.

Here, the processor 140 can perform an operation for minimizing interference of infrared light coming from the outside. For example, the processor 140 may minimize sensing of external infrared light by identifying infrared light other than the infrared light reflected by the user's touch based on the second image and controlling the gain value or the exposure value of the camera 120.

Specifically, the processor 140 may control the projection unit 110 to output an original image on the projection surface.

While the original image is output onto the projection surface, the processor 140 may acquire a first image by adjusting at least one of a gain value and an exposure value of the camera 120 to a first predetermined value and taking a picture output onto the projection surface. Here, the first image may be an image corresponding to an RGB image acquired by sensing the visible light 41-2, but is not limited thereto.

The processor 140 may acquire a second image by adjusting at least one of the gain value and the exposure value of the camera 120 to a second predetermined value and taking the picture output onto the projection surface. Here, the second image may be an image corresponding to an infrared light image 41-2 acquired by sensing the infrared light 41-1, but is not limited thereto.

Here, the camera 120 may sense a relatively larger amount of light when at least one of the gain value and the exposure value of the camera 120 is set to the first predetermined value than when at least one of the gain value and the exposure value of the camera 120 is set to the second predetermined value.

When at least one of the gain value and the exposure value of the camera 120 is the first predetermined value, the processor 140 may acquire an RGB image by sensing the visible light 41-2 through the camera 120 because a certain amount or more of the visible light 41-2 is included together with the infrared light 41-1 in the light transmitted through the filter 10.

When at least one of the gain value and the exposure value of the camera 120 is the second predetermined value, the processor 140 may acquire an infrared light image 41-2 by sensing the infrared light 41-1 through the camera 120 because the infrared light 41-1 is mostly included, with little visible light 41-2, in the light transmitted through the filter 10. That is, the amount of visible light 41-2 sensed by the processor 140 through the camera 120 to acquire the second image may be smaller than a threshold value.

More specifically, when acquiring a first image corresponding to an RGB image, the processor 140 may acquire the first image by sensing light including visible light 41-2 and infrared light 41-1 transmitted through the filter 10 through the camera 120 in a state where the exposure value of the camera 120 is adjusted to a first exposure value. The processor 140 may also acquire the first image by sensing light including visible light 41-2 and infrared light 41-1 transmitted through the filter 10 through the camera 120 in a state where the gain value of the camera 120 is adjusted to a first gain value.

In addition, when acquiring a second image corresponding to an infrared light image 41-2, the processor 140 may acquire the second image by sensing light including visible light and infrared light 41-1 transmitted through the filter 10 through the camera 120 in a state where the exposure value of the camera 120 is adjusted to a second exposure value. The processor 140 may also acquire the second image by sensing light including visible light 41-2 and infrared light 41-1 transmitted through the filter 10 through the camera 120 in a state where the gain value of the camera 120 is adjusted to a second gain value.

As described above, the processor 140 may acquire the first image and the second image by adjusting the gain value and the exposure value of the camera 120.

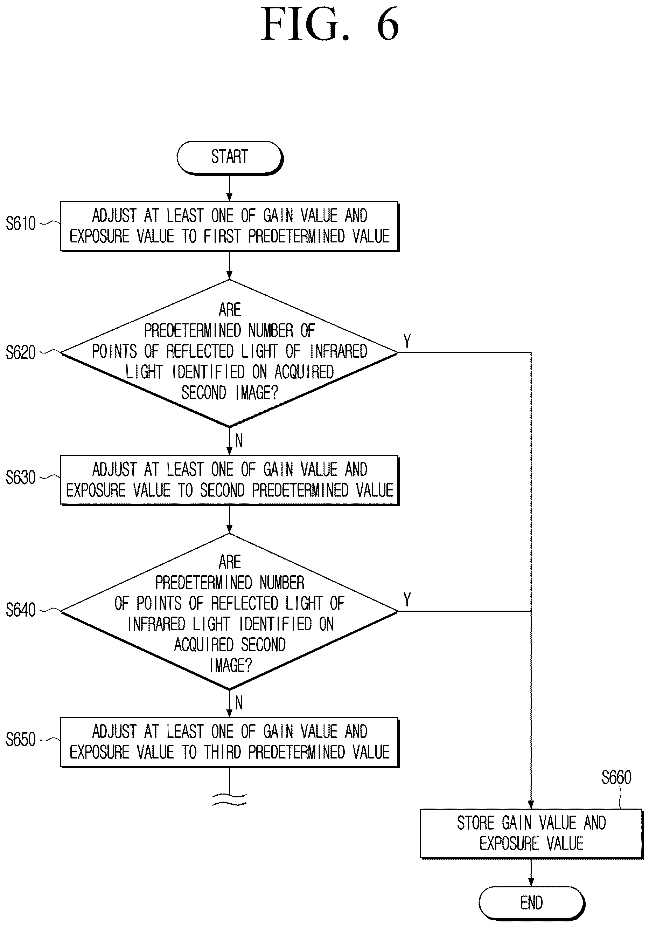

FIG. 6 is a flowchart for explaining a process of adjusting the gain value and the exposure value of the camera 120 according to an embodiment of the disclosure.

Referring to FIG. 6, the processor 140 may adjust at least one of the gain value and the exposure value of the camera 120 in such a manner that a predetermined number of points of reflected light of the infrared light 41-1 are identified on the acquired second image. That is, when a predetermined number of points of reflected light of the infrared light 41-1 are identified, the gain value or the exposure value of the camera 120 in that state may be identified and stored as an optimal value.

Specifically, the processor 140 may adjust at least one of the gain value and the exposure value to a first predetermined value (S610).

When a predetermined number of points of reflected light of the infrared light 41-1 are identified on the acquired second image (S620-Y), the processor 140 may store the gain value and the exposure value (S660).

When a predetermined number of points of reflected light of the infrared light 41-1 are not identified on the acquired second image (S620-N), the processor 140 may adjust at least one of the gain value and the exposure value to a second predetermined value (S630).

When a predetermined number of points of reflected light of the infrared light 41-1 are identified on the acquired second image (S640-Y), the processor 140 may store the gain value and the exposure value (S660).

When a predetermined number of points of reflected light of the infrared light 41-1 are not identified on the acquired second image (S640-N), the processor 140 may adjust at least one of the gain value and the exposure value to a third predetermined value (S650).

By repeating the above-described operation, the processor 140 may identify and store a gain value and an exposure value that are optimal for identifying the reflected light of the infrared light 41-1 corresponding to a user's touch location on the second image.

The processor 140 may identify a user's touch location on a picture output onto the projection surface based on the first image and the second image.

The processor 140 may identify a location of reflected light of the infrared light 41-1 reflected or scattered by a user's touch on the projection image or the second image based on the second image corresponding to the infrared light image 41-2. The processor 140 may identify an object included on the projection image or the first image corresponding to the location where the user's touch has been made by mapping the location of the reflected light of the infrared light 41-1 identified on the second image to the first image corresponding to the RGB image. The processor 140 may control the components of the electronic apparatus 100 to perform an operation corresponding to the identified object. Here, the object may be a GUI, an image, a picture, or the like, but is not limited thereto.

Specifically, the processor 140 may identify at least one coordinate corresponding to the user's touch location among a plurality of predetermined coordinates included in the picture output onto the projection surface based on the second image. The processor 140 may identify a location corresponding to the identified at least one coordinate in the first image, and identify the user's touch location on the picture output onto the projection surface based on the identified location.

The acquired first and second images may be distorted depending on the curvature of the lens of the camera 120 and the image-capturing angle of the camera 120.

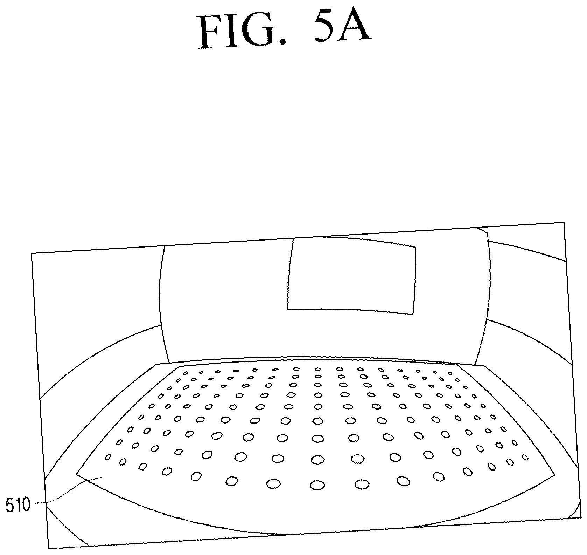

FIG. 5A is a diagram for explaining an acquired image distorted depending on the curvature of the lens of the camera 120 and the image-capturing angle according to an embodiment of the disclosure.

Referring to FIG. 5A, due to the curvature of the lens of the camera 120, the processor 140 may acquire a projection image 510 distorted depending on the lens curvature of the camera 120 through the camera 120. In addition, if the camera 120 is not positioned to be able to capture a projection image 510 from the front, the processor 140 may acquire a projection image 510 distorted depending on the position of the camera 120 through the camera 120.

As described above, in order to correct an image distortion caused due to the curvature of the lens of the camera 120 and an image distortion caused due to the position or angle of the camera 120, the processor 140 may perform an operation of correcting the acquired image.

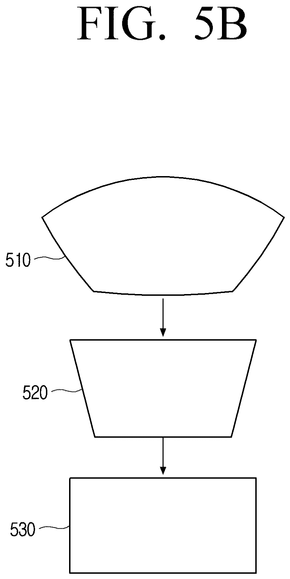

FIG. 5B is a diagram for explaining an operation of correcting an acquired image distorted depending on the curvature of the lens of the camera 120 and the image-capturing angle according to an embodiment of the disclosure.

Referring to FIG. 5B, the processor 140 may acquire an intermediate image 520 by performing a lens curvature correction on an initial distorted projection image 510 acquired through the camera 120. Thereafter, the processor 140 may acquire a final image 530 by performing a correction corresponding to the position or angle of the camera 120 on the intermediate image 520.

Specifically, the processor 140 may identify a correction value for correcting the picture output onto the projection surface based on the first image and the original image. The processor 140 may acquire a corrected first image and a corrected second image based on the correction value. The processor 140 may identify a touch coordinate on the picture output onto the projection surface based on the corrected first image and the corrected second image.

Here, the processor 140 may use homography calibration. The processor 140 may emit light for outputting a pattern image corresponding to the coordinate on the projection image onto the projection surface. The processor 140 may acquire an RGB image by adjusting the exposure value of the camera 120, and perform a homography calibration operation by generating a homography matrix based on a pattern on the acquired RGB image and a pattern of the original projection image.

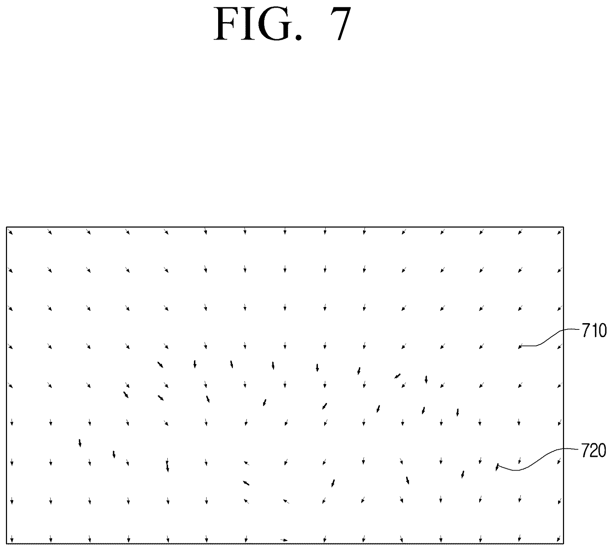

In addition, the processor 140 may use a grid approximation technique to correct a difference between a point at which reflected light of the infrared light 41-1 is identified according to a user's touch and a point of an actual user's touch location, which will be explained below with reference to FIG. 7.

FIG. 7 is a diagram illustrating an operation of correcting a difference between an actual touch position and an identified position on an image acquired from reflected light according to a user's touch according to an embodiment of the disclosure.

Referring to FIG. 7, the processor 140 may identify grids or coordinates 710 with regular intervals on the acquired image, and may identify a location 720 of reflected light of the infrared light 41-1 according to a user's touch on the projection image.

The processor 140 may perform a spatial correction operation to improve accuracy in identifying a user's touch location by correcting the difference between the actual touch and the reflected light of the infrared light 41-1 according to the user's touch.

Specifically, the processor 140 may acquire spatial information corresponding to the projection surface based on the first image. The processor 140 may correct the user's touch location on the picture output onto the projection surface based on the touch location identified in the second image and the spatial information corresponding to the projection surface.

FIG. 8 is a block diagram for explaining a configuration of the electronic apparatus 100 according to an embodiment of the disclosure.

Referring to FIG. 8, the processor 140 may further include a communication interface(150), a user interface(160), a microphone (170), a display(180), and a speaker(190).

The communication interface 150 may include a wireless communication interface, a wired communication interface, or an input interface. The wireless communication interface may communicate with various external devices using wireless communication technology or mobile communication technology. Examples of the wireless communication technology may include Bluetooth, Bluetooth Low Energy, CAN communication, Wi-Fi, Wi-Fi Direct, and ultrawide band (UWB) communication, zigbee, infrared light 41-1 communication (infrared Data Association (IrDA)), and near field communication (NFC), and examples of the mobile communication technology may include 3GPP, Wi-Max, long term evolution (LTE), and 5G.

The wireless communication interface may be implemented using an antenna capable of transmitting electromagnetic waves to the outside or receiving electromagnetic waves transmitted from the outside, a communication chip, a board, etc.

The wired communication interface may communicate with various external devices based on a wired communication network. Here, the wired communication network may be implemented, for example, using a physical cable such as a pair cable, a coaxial cable, an optical fiber cable, or an Ethernet cable.

Either the wireless communication interface or the wired communication interface may be omitted in a certain embodiment. Accordingly, the electronic apparatus 100 may include only the wireless communication interface, or may include only the wired communication interface. In addition, the electronic apparatus 100 may include an integrated communication interface that supports both wireless connection through the wireless communication interface and wired connection through the wired communication interface.

The electronic apparatus 100 is not limited to inclusion of one communication interface 150 that performs a communication connection in one manner, and may include a plurality of communication interfaces 150 that perform a communication connection in a plurality of manners.

The processor 140 may perform a communication connection with an external device or an external server through the communication interface 150 to transmit information about a user's touch location on the projection image or an image acquired by the camera 120 to the external device or the external server.

The processor 140 may perform a communication connection with an external device or an external server through the communication interface 150 to transmit or receive a gain value or an exposure value of the camera 120 to or from the external device or the external server.

In addition, the processor 140 performs a communication connection with a user terminal device through the communication interface 150 to receive a signal from the user terminal device for acquiring an image through the camera 120 or acquiring a gain value or an exposure value of the camera 120.

The user interface 160 may include a button, a lever, a switch, a touch-type interface, or the like, and the touch-type interface may be implemented by receiving an input through a user's touch on a display screen.

The processor 140 may receive a user input through the user interface 160. Based on the received user input, the processor 140 may identify a user instruction corresponding to the user input.

Based on the identified user instruction, the processor 140 may perform an operation of emitting light to output a projection image on the projection surface, or may adjust a gain value or an exposure value of the camera 120.

Based on the identified user instruction, the processor 140 may acquire an RGB image by sensing visible light 41-2 or acquire an infrared light image 41-2 by sensing infrared light 41-1.

The microphone 170 may refer to a module that acquires sound and converts the sound into an electrical signal, and may be a condenser microphone, a ribbon microphone, a moving coil microphone, a piezoelectric element microphone, a carbon microphone, or a micro electro mechanical system (MEMS) microphone. In addition, the microphone 170 may be implemented in an omni-directional, bi-directional, unidirectional, sub-cardioid, super-cardioid, or hyper-cardioid manner.

The processor 140 may acquire user's voice data through the microphone 170. Based on the acquired voice data, the processor 140 may identify a user instruction included in the user voice data through a voice recognition model or the like.

Based on the identified user instruction, the processor 140 may perform an operation of emitting light to output a projection image on the projection surface or adjust a gain value or an exposure value of the camera 120.

Based on the identified user instruction, the processor 140 may acquire an RGB image by sensing visible light 41-2 or acquire an infrared light image 41-2 by sensing infrared light 41-1.

The display 180 may include various types of display panels such as a liquid crystal display (LCD) panel, an organic light emitting diode (OLED) panel, an active-matrix organic light-emitting diode (AM-OLED) panel, a liquid crystal on silicon (LcoS) panel, a quantum dot light-emitting diode (QLED) panel, a digital light processing (DLP) panel, a plasma display panel (PDP), an inorganic LED panel, anda micro-LED panel, but is not limited thereto. Meanwhile, the display 180 may constitute a touch screen together with a touch panel, or may be formed of a flexible panel.

The display 180 may be implemented in a 2D square or rectangular shape, but is not limited thereto, and may be implemented in various shapes such as a circular shape, a polygonal shape, or a 3D solid shape.

The processor 140 may control the display 180 to output an RGB image and an infrared light image 41-2 acquired through the camera 120.

The processor 140 may control the display 180 to output information about a gain value or an exposure value of the camera 120.

The processor 140 may control the display 180 to output information about a user's touch location on the projection image.

The speaker 190 may include a tweeter for reproducing high-pitch sound, a mid-range for reproducing mid-pitch sound, a woofer for reproducing low-pitch sound, a subwoofer for reproducing ultra-low-pitch sound, an enclosure for controlling resonance, and a crossover network that splits an electrical signal frequency input to the speaker 190 by band, etc.

The speaker 190 may output an audio signal to the outside of the electronic apparatus 100. The speaker 190 can output multimedia playbacks, recording playbacks, various notification sounds, voice messages, etc. The electronic apparatus 100 may include an audio output device such as the speaker 190, but may include an output device such as an audio output terminal. In particular, the speaker 190 may provide acquired information, information processed and produced based on the acquired information, a result of responding to a user voice, or a result of operation in response to a user voice, etc. in voice form.

The processor 140 may control the speaker 190 to output information about a gain value or an exposure value of the camera 120.

The processor 140 may control the speaker 190 to output information about a user's touch location on the projection image.

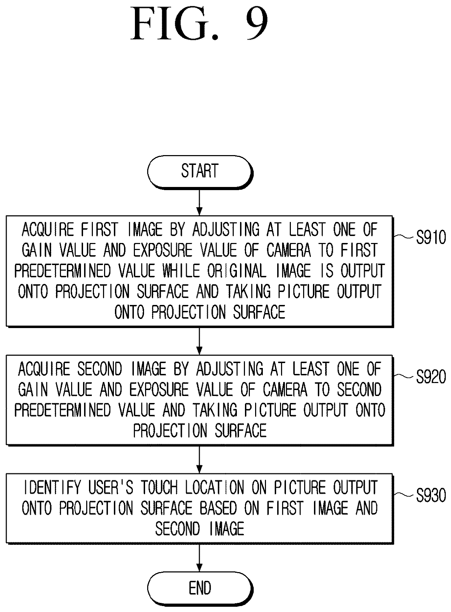

FIG. 9 is a flowchart for explaining an operation of the electronic apparatus 100 according to an embodiment of the disclosure.

Referring to FIG. 9, the electronic apparatus 100 may control the projection unit 110 to output an original image onto a projection surface by executing at least one instruction.

The electronic apparatus 100 may acquire a first image by adjusting at least one of a gain value and an exposure value of the camera 120 to a first predetermined value while the original image is output onto the projection surface and taking a picture output onto the projection surface (S910).

The electronic apparatus 100 may acquire a second image by adjusting at least one of the gain value and the exposure value of the camera 120 to a second predetermined value and taking the picture output onto the projection surface (S920).

The processor 140 may identify a user's touch location on a picture output onto the projection surface based on the first image and the second image (S930).

The electronic apparatus 100 may identify at least one coordinate corresponding to the user's touch location among a plurality of predetermined coordinates included in the picture output onto the projection surface based on the second image. The processor 140 may identify a location corresponding to the identified at least one coordinate in the first image, and identify the user's touch location on the picture output onto the projection surface based on the identified location.

Here, the camera 120 may sense a relatively larger amount of light when at least one of the gain value and the exposure value of the camera 120 is set to the first predetermined value than when at least one of the gain value and the exposure value of the camera 120 is set to the second predetermined value.

In addition, the camera 120 may include a filter 10 that transmits visible light 41-2 and infrared light 41-1. Therethrough. The filter 10 may be implemented in such a manner that an amount of the infrared light 41-1 transmitted through the filter 10 is larger than an amount of the visible light 41-2 transmitted through the filter 10 by a predetermined amount or more.

According to an embodiment, methods according to various embodiments disclosed herein may be included in a computer program product for provision. The computer program product may be traded as a commodity between a seller and a buyer. The computer program product may be distributed in the form of a machine-readable storage medium (e.g., a compact disc read only memory (CD-ROM)), or may be distributed online (e.g., downloaded or uploaded) via an application store (e.g., PlayStore^{™}) or directly between two user devices (e.g., smartphones). If the computer program product is distributed online, at least part of the computer program product (e.g., a downloadable app) may be temporarily generated or at least temporarily stored in a machine-readable storage medium, such as a memory of a server of a manufacturer, a server of an application store, or a relay server.

Although the preferred embodiments of the disclosure have been illustrated and described above, the disclosure is not limited to the specific embodiments described above, and various modification may be made by those skilled in the art without departing from the gist of the disclosure as claimed in the appended claims. Such modifications should not be individually understood from the technical spirit or prospect of the disclosure.

## Claims

1. An electronic apparatus comprising:
a projection unit;
a camera;
a memory storing at least one instruction; and
one or more processors connected to the projection unit, the camera, and the memory to control the electronic apparatus,
wherein the one or more processors are configured to, by executing the at least one instruction,:
control the projection unit to output an original image onto a projection surface;
acquire a first image by adjusting at least one of a gain value and an exposure value of the camera to a first predetermined value while the original image is output onto the projection surface and taking a picture output onto the projection surface;
acquire a second image by adjusting at least one of the gain value and the exposure value of the camera to a second predetermined value and taking the picture output onto the projection surface; and
identify a user's touch location on the picture output onto the projection surface based on the first image and the second image, and
the camera senses a relatively larger amount of light when at least one of the gain value and the exposure value of the camera is set to the first predetermined value than when at least one of the gain value and the exposure value of the camera is set to the second predetermined value.

2. The electronic apparatus as claimed in claim 1,
wherein the camera includes a filter configured to transmit visible light and infrared light therethrough, and
the filter is implemented in such a manner that an amount of the transmitted infrared light is larger than an amount of the transmitted visible light by a predetermined amount or more.

3. The electronic apparatus as claimed in claim 2,
wherein the one or more processors are configured to:
acquire the first image by sensing light including the visible light and the infrared light transmitted through the filter through the camera in a state where the exposure value of the camera is adjusted to a first exposure value; and
acquire the second image by sensing light including the visible light and the infrared light transmitted through the filter through the camera in a state where the exposure value of the camera is adjusted to a second exposure value, and
an amount of the visible light sensed through the camera to acquire the second image is smaller than a threshold value.

4. The electronic apparatus as claimed in claim 2,
wherein the one or more processors are configured to:
acquire the first image by sensing light including the visible light and the infrared light transmitted through the filter through the camera in a state where the gain value of the camera is adjusted to a first gain value; and
acquire the second image by sensing light including the visible light and the infrared light transmitted through the filter through the camera in a state where the gain value of the camera is adjusted to a second gain value, and
an amount of the visible light sensed through the camera to acquire the second image is smaller than a threshold value.

5. The electronic apparatus as claimed in claim 2,
wherein the one or more processors are configured to adjust at least one of the gain value and the exposure value of the camera in such a manner that a predetermined number of points of reflected light of the infrared light are identified on the acquired second image.

6. The electronic apparatus as claimed in claim 1, wherein the one or more processors are configured to:
identify at least one coordinate corresponding to the user's touch location among a plurality of predetermined coordinates included in the picture output onto the projection surface based on the second image;
identify a location corresponding to the identified at least one coordinate in the first image; and
identify the user's touch location on the picture output onto the projection surface based on the identified location.

7. The electronic apparatus as claimed in claim 1,
wherein the one or more processors are configured to:
identify a correction value for correcting the picture output onto the projection surface based on the first image and the original image;
acquire a corrected first image and a corrected second image based on the correction value; and
identify a touch coordinate on the picture output onto the projection surface based on the corrected first image and the corrected second image.

8. The electronic apparatus as claimed in claim 1,
wherein the one or more processors are configured to:
acquire spatial information corresponding to the projection surface based on the first image; and
correct the user's touch location on the picture output onto the projection surface based on the touch location identified in the second image and the spatial information corresponding to the projection surface.

9. A method for controlling an electronic apparatus, the method comprising:
controlling a projection unit to output an original image onto a projection surface;
acquiring a first image by adjusting at least one of a gain value and an exposure value of a camera to a first predetermined value while the original image is output onto the projection surface and taking a picture output onto the projection surface;
acquiring a second image by adjusting at least one of the gain value and the exposure value of the camera to a second predetermined value and taking the picture output onto the projection surface; and
identifying a user's touch location on the picture output onto the projection surface based on the first image and the second image,
wherein the camera senses a relatively larger amount of light when at least one of the gain value and the exposure value of the camera is set to the first predetermined value than when at least one of the gain value and the exposure value of the camera is set to the second predetermined value.

10. The method as claimed in claim 9, wherein the camera includes a filter configured to transmit visible light and infrared light therethrough, and
the filter is implemented in such a manner that an amount of the transmitted infrared light is larger than an amount of the transmitted visible light by a predetermined amount or more.

11. The method as claimed in claim 10,
wherein in the acquiring of the first image, the first image is acquired by sensing light including the visible light and the infrared light transmitted through the filter through the camera in a state where the exposure value of the camera is adjusted to a first exposure value,
in the acquiring of the second image, the second image is acquired by sensing light including the visible light and the infrared light transmitted through the filter through the camera in a state where the exposure value of the camera is adjusted to a second exposure value, and
an amount of the visible light sensed through the camera to acquire the second image is smaller than a threshold value.

12. The method as claimed in claim 10,
wherein in the acquiring of the first image, the first image is acquired by sensing light including the visible light and the infrared light transmitted through the filter through the camera in a state where the gain value of the camera is adjusted to a first gain value,
in the acquiring of the second image, the second image is acquired by sensing light including the visible light and the infrared light transmitted through the filter through the camera in a state where the gain value of the camera is adjusted to a second gain value, and
an amount of the visible light sensed through the camera to acquire the second image is smaller than a threshold value.

13. The method as claimed in claim 10, further comprising adjusting at least one of the gain value and the exposure value of the camera in such a manner that a predetermined number of points of reflected light of the infrared light are identified on the acquired second image.

14. The method as claimed in claim 9, further comprising:
identifying at least one coordinate corresponding to the user's touch location among a plurality of predetermined coordinates included in the picture output onto the projection surface based on the second image;
identifying a location corresponding to the identified at least one coordinate in the first image; and
identifying the user's touch location on the picture output onto the projection surface based on the identified location.

15. The method as claimed in claim 9, further comprising:
identifying a correction value for correcting the picture output onto the projection surface based on the first image and the original image;
acquiring a corrected first image and a corrected second image based on the correction value; and
identifying a touch coordinate on the picture output onto the projection surface based on the corrected first image and the corrected second image.
